# EUROPÄISCHE PATENTSCHRIFT

(11) **EP 1 505 016 B1**
(45) Veröffentlichungstag und Bekanntmachung des Hinweises auf die Patenterteilung: **25.05.2011**
(21) Anmeldenummer: 04017270.2
(22) Anmeldetag: 22.07.2004
(51) Int. Cl.: B65G 53/60

(54) **Vakuumfördervorrichtung mit Wäge- oder Dosiereinrichtung**
Vacuum transfer device with weighing and dosing device
Dispositif de transport sous vide avec dispositif de pesage et de dosage

(30) Priorität: 05.08.2003 DE 20312073 U
(43) Veröffentlichungstag der Anmeldung: 09.02.2005
(60) Teilanmeldung: 10012748.9
(73) Patentinhaber: Volkmann GmbH, 59494 Soest (DE)
(72) Erfinder: Volkmann, Thilo, 59494 Soest (DE)
(74) Vertreter: GROSSE SCHUMACHER KNAUER VON HIRSCHHAUSEN

(56) Entgegenhaltungen:
- EP-A- 0 997 184

## Beschreibung

Die vorliegende Erfindung betrifft eine Vakuumfördervorrichtung mit Wäge- oder Dosiereinrichtung mit den Merkmalen des Oberbegriffes des Anspruchs 1.

Vakuumförderer werden üblicherweise zum Transport von kleinteiligem oder pulverförmigen Material, wie Pulver, Granulate, Stäube, Tabletten oder Kleinteile in einem Sauggasstrom, der in der Regel aus Luft oder Inertgas besteht, eingesetzt. Dabei wird das Material von einer Aufgabestelle über z. B. ein Handsaugrohr oder einen Aufgabetrichter abgesaugt, durch eine Schlauch- oder Rohrleitung transportiert und gelangt über eine Einsaugöffnung in den Abscheideraum des Vakuumförderers. Dort trennt sich das Sauggas von dem transportierten Material, welches in dem Abscheidebehälter gesammelt wird, ggf. ist der Gasseite ein Filterelement nachgeschaltet. Das Sauggas verläßt den Abscheideraum in Richtung der Vakuumpumpe, die üblicherweise direkt auf der Oberseite des Abscheideraumes fest installiert ist.

Bei einem Standard-Vakuumförderer befindet sich in der Regel an der Unterseite des Abscheidebehälters ein Entleerventil, durch welches das Material den Abscheideraum verlassen kann, um z. B. direkt in Behälter zum Abpacken zu fallen. Zusätzlich kann sich ein Gasventil zwischen dem Abscheidebehälter und Vakuumpumpe befinden.

Während des Ansaugvorgangs, dem sog. Saugtakt ist das Entleerventil geschlossen und das Gasventil zwischen Abscheidebehälter und Vakuum geöffnet. Der Abscheidebehälter wird somit für eine gewisse vorherbestimmte Zeit oder bis zu einem bestimmten Füllungsgrad mit Material gefüllt. Anschließend wird im sog. Entleertakt das Gasventil zwischen Abscheidebehälter und Vakuum geschlossen oder die Vakuumpumpe abgeschaltet und das Entleerventil geöffnet. Das transportierte Material fällt nun im einfachsten Fall durch die Entleeröffnung aus dem Abscheidebehälter heraus. Notwendigenfalls kann aber auch durch Überdruck das Material aus dem Abscheidebehälter ausgeblasen werden oder brückenbildende Materialien werden fluidisiert. Durch Gegenblasen von der Reingasseite her kann auch der Filter von anhaftendem Filterkuchen gereinigt werden. Eine Taktsteuerung regelt die Dauer der einzelnen Ansaug- und Entleertakte.

Einige Vakuumförderer erlauben zusätzlich zu dem bloßen Transport auch die Möglichkeit der Dosierung von Fördergut. Solche Vakuumförderer mit Dosierfunktion unterscheiden sich von Vakuumförderern ohne Dosierfunktion vor allem dadurch, daß nach Abschalten der Vakuumpumpe bzw. Unterbrechung des Ansaugens das Entleerventil noch für eine so ausreichende Zeit geschlossen bleibt, daß der Förderprozeß im Abscheidebehälter vollkommen zum Erliegen gekommen ist, daher alles noch im Flug befindliche Material sich im Abscheidebehälter abgesetzt hat. Danach wird über eine Wiegevorrichtung die geförderte Menge an Fördergut gewogen. Dies erfolgt beispielsweise so, daß der Vakuumförderer auf einer Wiegevorrichtung, wie einer Rahmenkonstruktion mit einem System von z. B. drei Drucklast-Wiegezellen ruht. Diese mißt nun das Gesamtgewicht von Vakuumförderer plus darin enthaltenem Fördergut.

Anschließend wird das Entleerventil geöffnet. Danach und/oder davor wird das Leergewicht des Vakuumförderers gewogen, um die entnommene Menge an Fördergut zu bestimmen. Diese nochmalige Wägung wird aus dem Grund vorgenommen, daß erfahrungsgemäß eine einmalige Tarierung zu Beginn des Förderprozesses nicht ausreicht. Dies aus dem Grund, daß die Masse des im Filter des Vakuumförderers und an den Wandungen des Abscheidebehälters anhaftenden Fördergutes sich von Fördertakt zu Fördertakt ändert und so die Messungen verfälscht.

Um eine größere Dosiermenge an Fördergut als in einem Saugtakt möglich ist, zu erreichen, wird das Fördergut in mehreren Saugtakten gefördert. Eine Steuerung ermittelt zuvor die Anzahl an benötigten Saugtakten und das Füllmengensoll je Saugtakt . Dabei wird üblicherweise in den ersten Takten mit Schnellfüllzyklen größere Mengen an Fördergut gefördert, in den letzten Takten wird dann ggf. im Flugfördermodus gearbeitet, der eine sehr kontinuierliche Förderung gewährleistet, so daß sich besser an das Förderungsmengensoll angenähert werden kann. Dieses Vorgehen ist zeitaufwendig.

Es wurde daher dazu übergegangen, während der Förderung den Vakuumförderer kontinuierlich zu wiegen. Kurz vor Erreichen des Füllmengensolls für einen bestimmten Saugtakt wurde die Vakuumpumpe abgeschaltet bzw. der Ansaugvorgang unterbrochen. Dieses Vorgehen ist schneller aber die Wägungsgenauigkeit leidet unter den wechselnden Querkräften, die auf den Abscheidebehälter während des Förderbetriebs einwirken. In der Praxis hat sich herausgestellt, daß die Dosierungsgenauigkeit dieser Vakuumfördereinrichtungen oftmals unzureichend ist. Abhängig vom Fördergut ergeben sich Abweichungen von 20 bis 500g zur tatsächlich zu erreichenden Fördermenge (Zielmenge).

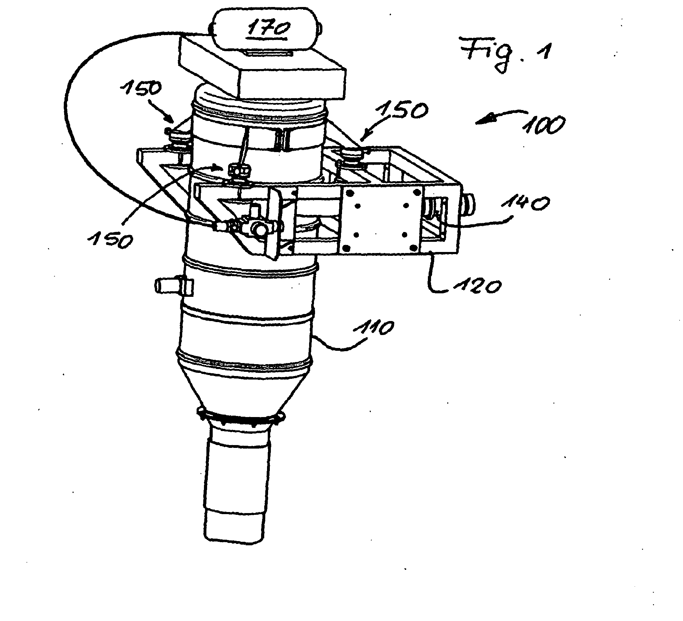

Fig. 1 zeigt eine Ansicht auf einen bisherigen Vakuumförderer 100 mit Dosierfunktion. Wie in Fig.1 angedeutet, sitzt der Vakuumförderer in einer Rahmenkonstruktion 120 auf einer 3-Punkt-Wiegevorrichtung 150 auf und trägt auf ihrem Abscheidebehälter 110 eine Vakuumpumpe 170. Da der Vakuumförderer während des Fördervorgangs kontinuierlich gewogen wird, müssen die Wägung störende Kräfte und Einflüsse möglichst unterdrückt oder gering gehalten werden.

Dazu wurde unter anderem die Eintrittsseite des Abscheidebehälters mit einem Entkopplungssystem 140 versehen. Wie Fig. 1 zu entnehmen ist, schließt sich an die Eintrittsöffnung des Abscheidebehälters ein Entkoppler an, dessen anderes Ende fest mit der Rahmenkonstruktion verbunden ist, woran sich das (nicht gezeigte) Schlauch- oder Rohrsystem der Arbeitsseite anschließt. Dieses Entkopplungssystem soll gewährleisten, daß die durch das transportierte Material verursachten Kräfte sich nicht störend auf die Wägung auswirken.

Es hat sich jedoch gezeigt, daß diese Maßnahmen nicht ausreichen, die störenden Einflüsse auf die Wägung auf ein akzeptables Maß zu beschränken. Diese störenden Einflüsse beruhen im Wesentlichen auf dem immer wieder unterschiedlich hohen Vakuumniveau innerhalb der Transportleitung, dessen störender Querkrafteinfluss mit den bisher bekannten Methoden sich trotz Kraftentkoppelung nicht kompensieren ließ. Die Krafteinkoppelung diente vielmehr der Vermeidung von Stößen und mechanischen Zugkräften, welche durch das Förderprodukt und das Eigengewicht der Transportleitung entstehen. Da der Abschaltzeitpunkt der Vakuumpumpe bzw. die Unterbrechung des Ansaugprozesses aufgrund der Wägung des Vakuumförderers vorgenommen wird, wird dieser Punkt bei bisherigen Vakuumförderern nach wie vor nur unzureichend getroffen. Der festgelegte Zielwert an Fördermenge nicht genau genug erreicht wie die bereits weiter oben bereits genannten Abweichungen verdeutlichen.

Es stellt sich somit die Aufgabe, eine Vakuumfördereinrichtung zu schaffen, die in der Lage ist, während des laufenden Förderprozesses eine genauere Wägung und/oder einen genauere Festlegung des Abschaltzeitpunkts der Vakuumpumpe bzw. der Unterbrechung des Ansaugprozesses zu gewährleisten.

Zur Lösung dieser Aufgabe wird eine Vakuumfördervorrichtung mit den Merkmalen des Anspruches 1 vorgeschlagen. Demnach basiert die Erfindung auf dem Grundgedanken, daß bei einer Vakuumfördervorrichtung mit Wäge- oder Dosiereinrichtung, die einen mit Vakuum beaufschlagbaren Abscheidebehälter für eine intermittierende Zwischenspeicherung Dazu wurde unter anderem die Eintrittsseite des Abscheidebehälters mit einem Entkopplungssystem 140 versehen. Wie Fig. 1 zu entnehmen ist, schließt sich an die Eintrittsöffnung des Abscheidebehälters ein Entkoppler an, dessen anderes Ende fest mit der Rahmenkonstruktion verbunden ist, woran sich das (nicht gezeigte) Schlauch- oder Rohrsystem der Arbeitsseite anschließt. Dieses Entkopplungssystem soll gewährleisten, daß die durch das transportierte Material verursachten Kräfte sich nicht störend auf die Wägung auswirken.

Es hat sich jedoch gezeigt, daß diese Maßnahmen nicht ausreichen, die störenden Einflüsse auf die Wägung auf ein akzeptables Maß zu beschränken. Diese störenden Einflüsse beruhen im Wesentlichen auf dem immer wieder unterschiedlich hohen Vakuumniveau innerhalb der Transportleitung, dessen störender Querkrafteinfluss mit den bisher bekannten Methoden sich trotz Kraftentkoppelung nicht kompensieren ließ. Die Krafteinkoppelung diente vielmehr der Vermeidung von Stößen und mechanischen Zugkräften, welche durch das Förderprodukt und das Eigengewicht der Transportleitung entstehen. Da der Abschaltzeitpunkt der Vakuumpumpe bzw. die Unterbrechung des Ansaugprozesses aufgrund der Wägung des Vakuumförderers vorgenommen wird, wird dieser Punkt bei bisherigen Vakuumförderern nach wie vor nur unzureichend getroffen. Der festgelegte Zielwert an Fördermenge wird nicht genau genug erreicht, wie die bereits weiter oben bereits genannten Abweichungen verdeutlichen.

Die EP 0 997 184 A1, von der die Erfindung ausgeht, beschreibt einen Schüttgut-Abscheidebehälter zum Fördern und dosierten Mischen von Schüttgutkomponenten mit einer motorbetätigten Auslaufklappe zur Entleerung und einem Filter im oberen Teil des Behälterinnenraums. Eine Saugförderung schließt sich an eine Reinluftleitung an. Das Gemisch aus Saugluft und angesaugten Schüttgutpartikeln gelangt über ein Materialeinlaufrohr in den Schüttgutbehälter. Ein Verwiegen der Schüttgutkomponenten erfolgt durch eine Druckmessdose auf der der Abscheidebehälter, sozusagen als Wiegezelle, gelagert ist. Die Reinluftleitung und das Materialeinlaufrohr sind jeweils über elastische Manschetten mit den äußeren Zu- und Ableitungen für den Schüttgutbehälter verbunden. Hinter der Auslaufklappe findet sich eine vergleichbare elastische Manschette über die das Fördergerät elastisch mit der Fallleitung verbunden ist. Das Materialeinlaufrohr führt in mittlerer Höhe in den Abscheidebehälter hinein, während die Unterdruckerzeugung über einen Rohrstutzen am Behälterkopf vorgenommen wird. Die EP 0 997 184 A1 lehrt daher eine konsequente vertikale Beabstandung zwischen Eintrittsöffnung für das Fördergut und Absaugung von Reingas. Die Problematik der Reaktionskräfte des Vakuums innerhalb des Abscheidebehälters bei der dortigen Anordnung von Einlass- und Saugstutzen, die insbesondere durch Kräfteschwankungen an der Vakuumpumpe während des Fördervorgangs Einfluss auf die Wiegeeinrichtung nehmen, bleibt unerwähnt.

Es stellt sich somit die Aufgabe, eine Vakuumfördereinrichtung zu schaffen, die in der Lage ist, während des laufenden Förderprozesses eine genauere Wägung und/oder einen genauere Festlegung des Abschaltzeitpunkts der Vakuumpumpe bzw. der Unterbrechung des Ansaugprozesses zu gewährleisten. Zur Lösung dieser Aufgabe wird eine Vakuumfördervorrichtung mit den Merkmalen des Anspruches 1 vorgeschlagen.

Die Erfindung sieht vor, daß bei einer Vakuumfördervorrichtung mit Wäge- oder Dosiereinrichtung, die einen mit Vakuum beaufschlagbaren Abscheidebehälter für eine intermittierende Zwischenspeicherung von in einem Sauggasstrom gefördertem Fördergut, eine Wiegeeinrichtung für das insbesondere kontinuierliche Wiegen des Abscheidebehälters sowie eine Vakuumpumpe und eine Steuerung umfaßt, die Vakuumpumpe kraftmäßig entkoppelt vom Abscheidebehälter vorgesehen ist.

Eine kraftmäßige Entkopplung von Vakuumpumpe und Abscheidebehälter bietet nicht nur den Vorteil, daß die zu wiegende Gesamtmasse sich um das Gewicht der Vakuumpumpe und ggf. zu dieser zugehörigen Teile verringert und somit eine größere Wiegeauflösung erlaubt. Vielmehr beeinflussen Kräfteschwankungen an der Vakuumpumpe während des Fördervorganges die Wiegeeinrichtung nicht mehr.

Die Erfindung hat erkannt, daß insbesondere die aus Querkrafteinflüssen aufgrund des Druckunterschieds zwischen Vakuumförderer und Umgebung herrührenden Störungen die Wägung nachhaltig beeinflussen. Diese sind aufgrund des schwankenden Vakuumniveaus innerhalb des Vakuumförderers ebenfalls Schwankungen unterworfen.

Erfindungsgemäß verfügt der Abscheidebehälter - zusätzlich zu der Eintrittsöffnung für den Eintritt von Fördergut in den Abscheidebehälter (Arbeitsseite der Vakuumfördereinrichtung) - auch im Bereich der Auslaßöffnung für den Austritt von Sauggas (Reingasseite der Vakuumfördereinrichtung) über einen Kraftentkoppler. An die Auslaßöffnung schließt sich dann bevorzugt eine Vakuumleitung an, die zur Vakuumpumpe führt. Ein wesentlicher Teil der störenden Querkräfte wird dadurch kompensiert, daß die Eintritts- und Auslaßöffnung des Abscheidebehälters für Sauggas in entgegengesetzte Richtungen weisen, vorzugsweise auch koaxial angeordnet sind. Auf diese Weise wird es vorteilhafterweise möglich, mit spürbarem Erfolg anhand der in jedem Saugtakt tatsächlich geförderten Menge durch die Steuerung das Füllmengensoll für den nächsten Takt entsprechend etwas größer oder kleiner festzulegen. Das verbessert bzw. beschleunigt die Dosiergenauigkeit bzw. Dosierdauer.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so daß die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in denen - beispielhaft - mehrere Ausführungsbeispiele der erfindungsgemäßen Vakuumfördervorrichtung dargestellt sind. In der Zeichnung zeigen:
Fig. 1 eine Vakuumfördervorrichtung nach dem Stand der Technik;
Fig. 2 einen Abscheidebehälter und eine Haltevorrichtung einer Ausführungsform einer erfindungsgemäßen Vakuumfördervorrichtung in perspektivischer Ansicht;
Fig. 3 dieselben Elemente aus Fig. 2 in einer Ansicht aus etwa der Richtung des Pfeils A in Fig. 2 (Rückseitenansicht);
Fig. 4 dieselben Elemente aus Fig. 2 und 3 in einer Ansicht aus etwa der Richtung des Pfeils B aus Fig. 2 (Eintrittsseitenansicht);
Fig. 5 dieselben Elemente aus Fig.2 bis 4 in einer Ansicht von oben; sowie
Fig. 6 einen Abscheidebehälter in Vertikal-Schnittansicht (schematisch und ohne Haltevorrichtung)

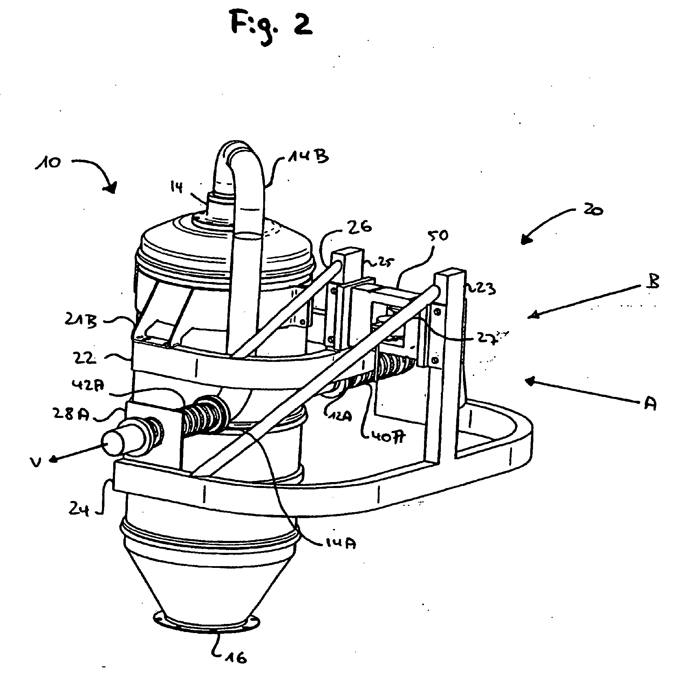

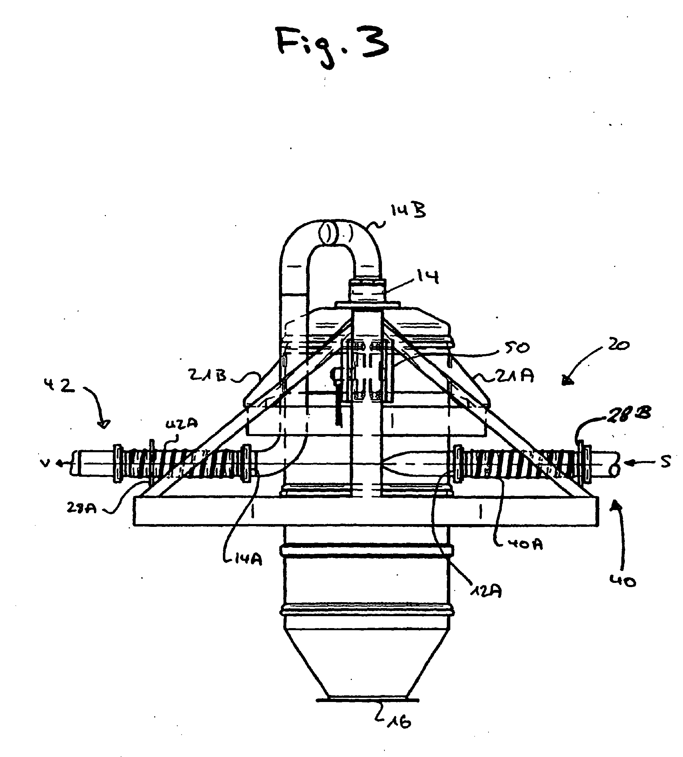

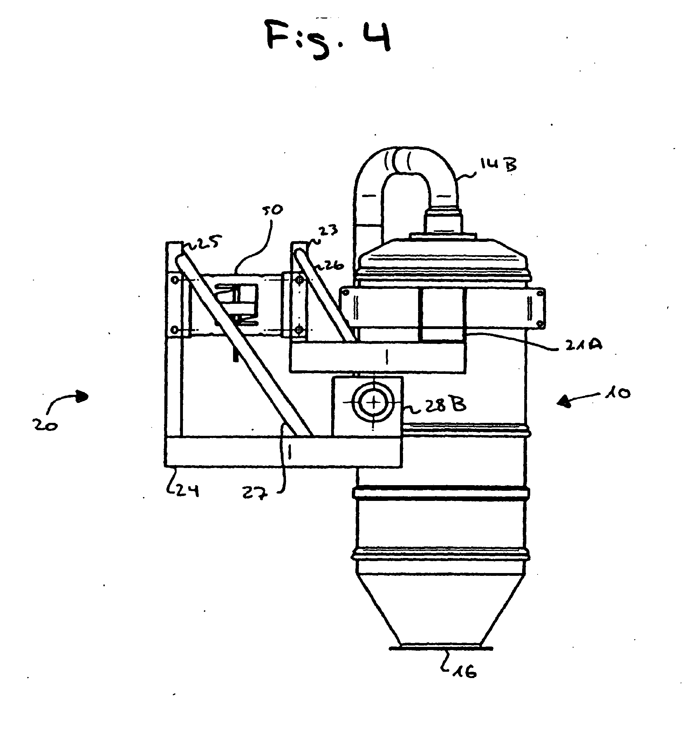

Fig. 2-5 zeigen verschiedene Ansichten eines vakuumdichten Abscheidebehälters 10 und einer Haltevorrichtung 20 einer Ausführungsform einer erfindungsgemäßen Vakuumfördervorrichtung.

Der Abscheidebehälter verfügt über eine mit einem etwa tangential ausgerichteten Einlaßstutzen 12 versehene seitliche Eintrittsöffnung 12A für Fördergut, einen kopfseitigen Auslaßstutzen 14 für Sauggas sowie eine bodenseitige vakuumdichte Entleervorrich-5 tung 16 wie z.B. ein (nicht dargestelltes) Entleerventil oder eine Entleerklappe (dargestellt), durch die nach jedem Fördertakt das Fördergut entnommen werden kann.

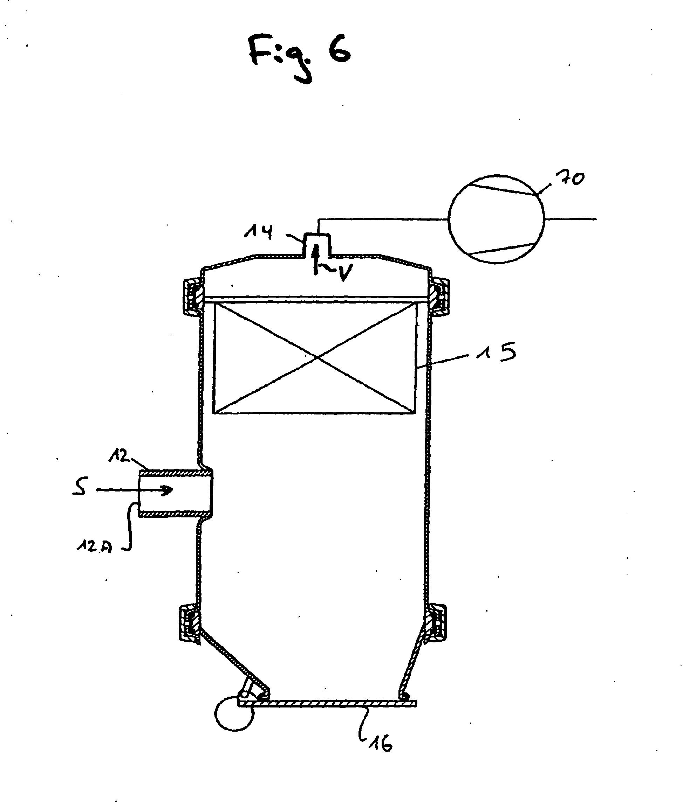

Fig. 6 zeigt den Abscheidebehälter 10 in einer schematischen Vertikal-Schnittansicht. Das Fördergut gelangt im Sauggasstrom S durch den Einlaßstutzen 12 in den Abscheidebehälterinnenraum. Sauggas und Fördergut trennen sich nun aufgrund ihrer unterschiedlichen Dichte. Das Sauggas wird von der (schematisch angedeuteten) Vakuumpumpe 70 angesaugt. Es verläßt den Abscheidebehälter 10 durch die Auslaßöffnung 14 (Vakuumstrom V), wobei es zuvor einen Filter 15 passiert. Das Fördergut sammelt sich auf der geschlossenen Entleervorrichtung 16 an, die hier als eine Entleerklappe ausgebildet ist.

Wie aus Fig. 2 bis 5 zu entnehmen ist, verfügt die Vakuumfördervorrichtung innerhalb einer zur Eintrittsöffnung 12A des Abscheidebehälters führenden Ansaugleitung 40 (Arbeitsseite) sowie innerhalb der von dem Auslaßstutzen 14 zur Vakuumpumpe 70 verlaufenden Vakuumleitung 42 (Reingasseite) über Kraftentkopplungsmittel (Kraftentkoppler 40A, 42A), die in der vorliegenden Ausführungsform als flexible, unterdruckfeste Rohrelemente ausgebildet sind. Die arbeits- und reingasseitigen Kraftentkoppler sind bevorzugt so angeordnet, daß sie koaxial zueinander verlaufen. Besonders bevorzugt liegt dieser koaxiale Bereich senkrecht zur Hauptachse des Abscheidebehälters 10. Zu diesem Zweck schließt sich an den Auslaßstutzen 14 des Abscheidebehälters 10 ein starrer Rohrkrümmer 14B an. Dieser ist im dargestellten Ausführungsbeispiel so gestaltet, daß sich an einen U-Bogen mit abwärts gerichteten Schenkeln einenends der Auslaßstutzen 14 mittig am Kopf des Abscheidebehälters 10 und anderenends nach einem 90° Bogen vom Abscheidebehälter 10 wegführend der Kraftentkoppler 42A anschließt. Die Eintrittsöffnung 12A des Abscheidebehälters 10 und die am Ende des Rohrkrümmers 14B sich befindenden Auslaßöffnung 14 A sind nun so angeordnet, daß sie in entgegengesetzte Richtungen münden. Hierdurch werden die Reaktionskräfte des Vakuums innerhalb des Abscheidebehälters 10 im wesentlichen gegeneinander aufgehoben. Das gelingt besonders vollständig, wenn die entgegengesetzt gerichteten Mündungen auf ein- und derselben Achse liegen. Eine Feinabstimmung der Reaktionskräfte kann im übrigen auch über die Wahl der Strömungsquerschnitte der Eintrittsöffnung 12A und des Eintrittsstutzens 12 im Vergleich zum Auslaßstutzen 14, dem Rohr 14B und der Auslaßöffnung 14A erfolgen. Ebenso ist es von Vorteil, wenn die Kraftentkoppler 40A, 42A und die Anschlüsse der Mündungen der Ansaugleitung 40 und der Vakuumleitung 42 zur Eintrittsöffnung 12A und zur Auslaßöffnung 14A ausgerichtet sind. Durch diese Kraftentkopplungsmittel 40A, 42A wird gewährleistet, daß von den Saugleitungen herrührende störende Effekte und Kräfte sich nicht oder nur unwesentlich auf die Wägung des Abscheidebehälters auswirken. Diese Kräftekompensation und Kraftentkopplung lassen sich besonders einfach mit der nachfolgend näher beschriebenen Haltevorrichtung 20 herbeiführen:

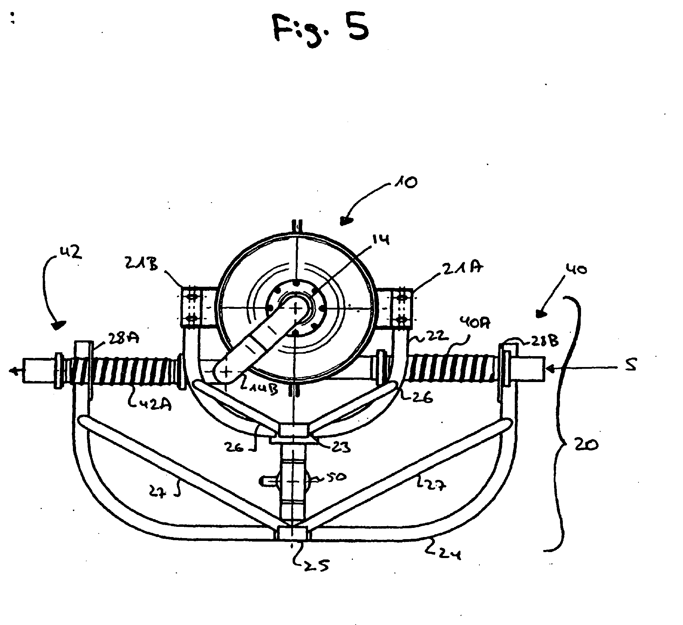

Die Haltevorrichtung 20 besteht in der dargestellten und insoweit bevorzugten Ausführungsform aus zwei eigenständigen Halterahmen 22 und 24, die - in Ansicht von oben (Fig.5) - jeweils angenähert eine U-Form bilden und jeweils in der Mitte der U's über je einen Vertikalträger 23 bzw. 25 verfügen. Zwischen den Vertikalträgern 23 und 25 und den Halterahmen 22 bzw. 24 verlaufen Diagonalstreben 26 bzw. 27. Zwischen den beiden Vertikalträgern 23 und 25 befindet sich eine Verbindung der beiden Halterahmen in Gestalt einer Wiegeeinrichtung 50.

Die Halterahmen 22 und 24 sind bevorzugt so zueinander angeordnet, daß, wie Fig. 5 zu entnehmen ist, von oben gesehen, der Halterahmen 22 zumindest teilweise innerhalb und ggf. oberhalb des Halterahmens 24 liegt. Zudem liegen bevorzugt (von oben gesehen) der Vertikalträger 23, der Vertikalträger 25 und der Mittelpunkt des Abscheidebehälters 10 im wesentlichen auf einer Geraden. Die Schenkel des inneren Halterahmens 22 erstrecken sich etwa bis zur Mitte des Abscheidebehälters 10. Dieser ist über zwei an einer den Behälter umspannenden Befestigungsschelle angebrachte Kragarme 21A, 21 B mit den Schenkelenden des Halterahmens 22 verbunden.

An den Schenkeln des äußeren Halterahmens 24 sind mindestens je ein Haltemittel 28A, 28B für die Ansaugleitung 40 bzw. die Vakuumleitung 42 zur Eintrittsöffnung 12A bzw. Auslaßöffnung 14A des Abscheidebehälters 10 angebracht. Bevorzugt ist dabei die arbeitsseitige Ansaugleitung so gestaltet, daß die zum Abscheidebehälter führenden Rohre bzw. Schläuche mit dem Haltemittel 28B abschließen. Hieran schließt sich der Kraftentkoppler 40A an. Bevorzugt erstreckt sich dieser bis zur Eintrittsöffnung 12A des ) Abscheidebehälters 10. Die Anordnung des Kraftentkopplers 42A und der Vakuumleitung 42 auf der Vakuumseite sind entsprechend. Da durch die reingasseitige Saugleitung (Vakuumleitung) kein Fördergut transportiert wird, kann dort auch eine einfachere Lösung gewählt werden. So kann, wie in dem vorliegenden Ausführungsbeispiel, das Haltemittel 28A auch einfach eine mit einer Kreisöffnung versehenen Platte sein, durch die der Kraftentkoppler 42A oder eine Saugleitung gesteckt wird.

Der zweigeteilte Wägerahmen 22, 24 ist auch unabhängig von der Vakuumfördervorrichtung von erfinderischer Bedeutung und bietet insbesondere den Vorteil, daß der zu wiegende Behälter einfach ein- und ausgebaut werden kann. Hierzu kann - zum einen - die Verbindung zwischen dem Abscheidebehälter und dem Halterahmen 22 gelöst werden. Bevorzugt wird jedoch die Verbindung zwischen den Halterahmen 22 und 24 im Bereich der Wiegezelle 50 gelöst werden, zum Beispiel über ein Klammer-Schnellspannsystem. In beiden Fällen müssen die Eintritts- und Austrittsseite im Bereich der Kraftentkoppler, z.B. über einfache Schlauchschellen, gegenüber der Ansaugleitung 40 und der Vakuumleitung 42 getrennt werden. Auf diese Weise wird z.B. bei einem Produktwechsel ein einfaches Austauschen des Abscheidebehälters 10 möglich. Auch die Reinigung des Abscheidebehälters wird so erleichtert.

Dadurch, daß das Sauggas vor Verlassen des Abscheidebehälters 10 den Filter 15 passiert, entsteht ein unvermeidlicher Filterdifferenzdruck zwischen Arbeits- und Vakuumseite. Da der Filterdifferenzdruck jedoch zum einen relativ gering und zum anderen in vielen Fällen konstant ist, kann er ignoriert werden, bzw. das Wägeergebnis kann um den aus den Filterdifferenzdruck störenden Faktor rechnerisch korrigiert werden.

### Bezugszeichenliste

- 10: Abscheidebehälter
- 12: Einlaßstutzen
- 12A: Eintrittsöffnung
- 14: Auslaßstutzen
- 14A: Auslaßöffnung
- 14B: Rohrkrümmer
- 15: Filter
- 16: Entleervorrichtung
- 20: Haltevorrichtung
- 21 A: Kragarm
- 21B: Kragarm
- 22: Halterahmen
- 23: Vertikalträger
- 24: Halterahmen
- 25: Vertikalträger
- 26: Diagonalstrebe
- 27: Diagonalstrebe
- 28A: Haltemittel
- 28B: Haltemittel
- 40: Ansaugleitung
- 40A: Kraftentkoppler
- 42: Vakuumleitung
- 42A: Kraftentkoppler
- 50: Wiegeeinrichtung
- 70: Vakuumpumpe
- 100: bekannter Vakuumförderer
- 110: Abscheidebehälter
- 120: Rahmenkonstruktion
- 140: Entkoppelungssystem
- 150: Wiegevorrichtung
- 170: Vakuumpumpe

## Patentansprüche

1. Vakuumfördervorrichtung mit Wäge- oder Dosiereinrichtung, die einen mit Vakuum beaufschlagbaren Abscheidebehälter (10) für eine intermittierende Zwischenspeicherung von in einem Sauggasstrom gefördertem Fördergut, ein Kraftentkopplungsmittel (40A) für den Eintritt von Fördergut in den Abscheidebehälter, ein Kraftentkopplungsmittel (42A) für den Austritt von Sauggas, eine Wiegeeinrichtung (50) für das, insbesondere kontinuierliche, Wiegen des Abscheidebehälters sowie eine Vakuumpumpe (70) und eine Steuerung umfasst, und bei der der Abscheidebehälter (10) vakuumdicht ausgebildet ist und über eine Eintrittsöffnung (12A) für Fördergut vakuumdicht an eine Ansaugleitung (40) und über eine Auslassöffnung (14A) vakuumdicht an eine Vakuumleitung (42) fluidisch angeschlossen ist und über ein vakuumdichtes Entleerelement (16) verfügt, wobei die Vakuumpumpe (70) vom Abscheidebehälter (10) kraftmäßig entkoppelt und derart angeordnet ist, dass sie nicht mitgewogen wird, **dadurch gekennzeichnet, dass** die Eintritts- bzw. Auslassöffnung (12A; 14A) derart in entgegen gesetzte Richtungen weisen, dass die Reaktionskräfte des Vakuums innerhalb des Abscheidebehälters (10) im wesentlichen gegeneinander aufgehoben werden.

2. Vakuumfördervorrichtung nach Anspruch 1, **dadurch gekennzeichnet, dass** die Mittel zur Kraftentkopplung von Arbeits- und Reingasseite in etwa koaxial verlaufen.

3. Vakuumfördervorrichtung nach einem der Ansprüche 1 bis 2, **dadurch gekennzeichnet, dass** die Eintrittsöffnung (12A) mit dem Abscheidebehälter (10) über einen etwa tangential zum Abscheidebehälter ausgerichteten Einlassstutzen (12) verbunden ist.

4. Vakuumfördervorrichtung nach einem der Ansprüche 2 bis 3, **dadurch gekennzeichnet, dass** sich an einen Auslassstutzen (14) ein Rohrkrümmer (14B) anschließt, der mit abwärts gerichteten Schenkeln einen Ends mit dem Auslassstutzen (14) am Kopf des Abscheidebehälters (10) und anderen Ends nach einem 90° Bogen vom Abscheidebehälter (10) wegführend mit dem Kraftentkoppler (42A) verbunden ist.

5. Vakuumfördervorrichtung nach einem der Ansprüche 1 bis 4, **dadurch gekennzeichnet, dass** die Strömungsquerschnitte der Eintrittsöffnung (12A) und des Eintrittstutzens (12) im Vergleich zu einem Auslassstutzen (14), einem Verbindungsrohr (14B) und der Auslassöffnung (14A) zur Feinabstimmung der Reaktionskräfte wählbar sind.

6. Vakuumfördervorrichtung nach einem der Ansprüche 1 bis 5, **dadurch gekennzeichnet, dass** die Kraftentkoppler (40A, 42A) und die Anschlüsse der Mündungen der Ansaugleitung (40) und der Vakuumleitung (42) zur Eintrittsöffnung (12A) und zur Auslassöffnung (14A) ausgerichtet sind.

7. Vakuumfördereinrichtung nach einem der Ansprüche 1 bis 6, **dadurch gekennzeichnet, dass** ein zweiteiliger Wägerahmen vorgesehen ist, dessen Verbindung in Gestalt der Wiegeeinrichtung (50) vorgesehen ist.

8. Vakuumfördervorrichtung nach einem der Ansprüche 1 bis 7, **dadurch gekennzeichnet, dass** ein innerer Halterahmen (22) für eine Verbindung mit dem Abscheidebehälter (10) und ein äußerer Halterahmen (24), der über Haltemittel (28A,28B) für die arbeits- und reingasseitigen Saugleitungen verfügt, vorgesehen ist.

9. Vakuumfördervorrichtung nach Anspruch 8, **dadurch gekennzeichnet, dass** zumindest eines der Kraftentkopplungsmittel (40A; 42A) zwischen dem äußeren Halterahmen (24) und der zugehörigen Verbindungsstelle (12A; 14A) zum Abscheidebehälter (10) eingefügt oder angeordnet ist.

10. Vakuumfördervorrichtung nach Anspruch 8 oder 9, **dadurch gekennzeichnet, dass** innerer und/oder äußerer Halterahmen (22, 24) in etwa U-förmig ausgestaltet sind.

11. Vakuumfördervorrichtung nach Anspruch 10, **dadurch gekennzeichnet, dass** innerer und/oder äußerer Halterahmen (22, 24) mit jeweils einem in etwa in der Mitte des U's angeordneten Vertikalträger (23, 25) ausgestattet sind.

12. Vakuumfördervorrichtung nach einem der Ansprüche 8 bis 11, **dadurch gekennzeichnet, dass** die Wiegeeinrichtung (50) zwischen dem äußeren (22) und inneren Halterahmen (24) wirkend eingefügt ist.

13. Vakuumfördervorrichtung nach Anspruch 12 **dadurch gekennzeichnet, dass** die Wiegeeinrichtung mit dem äußeren und/oder inneren Halterahmen (22; 24) lösbar verbunden ist.

14. Vakuumfördervorrichtung nach einem der Ansprüche 1 bis 13, die zusätzlich einen Filter (15) im Sauggasstrom zwischen Arbeits- und Reingasseite beinhaltet, **dadurch gekennzeichnet, dass** durch die Orientierung der Mündungsöffnungen (12A, 14A) zueinander und/oder des Abscheidebehälters (10) im Wiegerahmen der aus dem Filter (15) resultierenden Differenzdruck kompensiert wird.

## Claims

1. Vacuum conveying device with a weighing or metering device, comprising a separation chamber (10) capable of being subjected to a vacuum for intermittent intermediate storage of conveyed material conveyed in a flow of suction gas, force decoupling means (40A) for the entry of conveyed material into the separation chamber, a force decoupler (42A) for the outlet of suction gas, a weighing device (50) for the weighing, in particular continuous, of the separation chamber, and a vacuum pump (70) and a control unit, and in which the separation chamber (10) is formed to be vacuum-tight and is connected for fluid flow, with a vacuum-tight seal, to an inlet suction line (40) via an inlet opening (12 A) for conveyed material and is connected for fluid flow, with a vacuum-tight seal, to a vacuum line (42) via an outlet opening (14 A) and is provided with a vacuum-tight emptying element (16), the vacuum pump (70) being decoupled from the separation chamber (10) as far as force is concerned and being arranged in such a way that it is not weighed with it, **characterised in that** the inlet and outlet openings (12A, 14A) face in opposite directions in such a way that the forces of reaction due to the vacuum inside the separating chamber (10) substantially cancel each other out.

2. Vacuum conveying device according to claim 1, **characterised in that** the means for force decoupling on the working side and clean gas side extend approximately on the same axis.

3. Vacuum conveying device according to claim 1 or 2, **characterised in that** the inlet opening (12A) is connected to the separation chamber (10) via an inlet connection (12) which is aligned approximately tangentially to the separation chamber.

4. Vacuum conveying device according to either of claims 2 and 3, **characterised in that** there is connected to an outlet connection (14) a tube bend (14B) which is connected at one end, by downwardly directed portions, to the outlet connection (14) at the top of the separation chamber (10) and at the other end, after a 90° bend leading away from the separation chamber (10), to the force decoupler (42A).

5. Vacuum conveying device according to one of claims 1 to 4, **characterised in that** the flow cross section of the inlet opening (12A) and the inlet port (12) are selectable in comparison to an outlet port (14), a connection pipe (14B) and to the outlet opening (14A) for fine tuning of the reaction forces.

6. Vacuum conveying device according to one of claims 1 to 5, **characterised in that** the force decouplers (40A, 42A) and the connections for the mouths of the suction line (40) and the vacuum line (42) are aligned with the inlet opening (12A) and the outlet opening (14A).

7. Vacuum conveying device according to one of claims 1 to 6, **characterised in that** a two-piece weighing frame is provided, for which the connection is provided in the form of the weighing device (50).

8. Vacuum conveying device according to any one of claims 1 to 7, **characterised in that** an inner retaining frame (22) is provided for connection to the separation chamber (10) and an outer retaining frame (24), which is provided with retaining means (28A, 28B) for the working side and clean gas side suction lines, is provided.

9. Vacuum conveying device according to claim 8, **characterised in that** at least one of the force decoupling means (40A; 42A) is inserted or arranged between the outer retaining frame (24) and the associated point of connection (12A; 14A) to the separation chamber (10).

10. Vacuum conveying device according to claim 8 or 9, **characterised in that** the inner and/or outer retaining frames (22, 24) are designed approximately in a U-shape.

11. Vacuum conveying device according to claim 12, **characterised in that** the inner and/or outer retaining frames (22, 24) are each equipped with a vertical carrier (23, 25) arranged approximately in the middle of the U.

12. Vacuum conveying device according to any one of claims 8 to 11, **characterised in that** the weighing device (50) is inserted to act between the outer (22) and the inner retaining frame (24).

13. Vacuum conveying device according to claim 12, **characterised in that** the weighing device is connected in a detachable manner to the outer and/or inner retaining frame (22; 24).

14. Vacuum conveying device according to any one of claims 1 to 13, which additionally contains a filter (15) in the suction gas flow between the working side and clean gas sides, **characterised in that**, by the suitable orientation of the openings (12A, 14A) at the mouths to one another and/or of the separation chamber (10) in the weighing frame, the pressure differential resulting from the filter (15) is compensated for.

## Revendications

1. Dispositif de transport par le vide comportant une installation de pesée ou de dosage ayant un réservoir séparateur (10) mis sous vide pour un stockage intermédiaire intermittent du produit transporté par une veine de gaz d"aspiration, des moyens de découplage des forces (40A) pour l'entrée du produit transporté dans le réservoir séparateur (10), un moyen de découplage des forces (42A) pour la sortie de gaz d'aspiration, une installation de pesée (50) pour la pesée, en particulier continue, du réservoir séparateur ainsi qu'une pompe à vide (70) et une commande,
le réservoir séparateur (10) étant étanche au vide et relié par une liaison fluidique par un orifice d'entrée (12A) pour du produit transporté, de manière étanche au vide, à une conduite d'aspiration (40) et de manière étanche au vide, par un orifice de sortie (14A), à une conduite de vide (42) et il comporte un élément d'évacuation (16) étanche au vide,
la pompe à vide (70) étant découplée des forces par rapport au réservoir séparateur (10) et la pompe est installée de façon qu'elle ne soit pas intégrée à la pesée,
dispositif **caractérisé en ce que**
l'orifice d'entrée ou l'orifice de sortie (12A, 14A) sont dirigés dans des directions respectivement opposées de façon que les forces de réaction du vide à l'intérieur du réservoir séparateur (10) se compensent pratiquement les unes par rapport aux autres.

2. Dispositif de transport par le vide selon la revendication 1,
**caractérisé en ce que**
les moyens de découplage des forces entre le côté actif et le côté nettoyé sont sensiblement coaxiaux.

3. Dispositif de transport par le vide selon l'une des revendications 1 et 2,
**caractérisé en ce que**
l'orifice d'entrée (12A) est relié au réservoir séparateur (10) par un ajutage d'entrée (12) aligné sensiblement tangentiellement par rapport au réservoir séparateur.

4. Dispositif de transport par le vide selon l'une des revendications 2 à 3,
**caractérisé en ce qu'**
un coude (14B) est relié à un ajutage de sortie (14), le coude étant relié par ses branches descendantes, par une extrémité à l'ajutage de sortie (14) à la tête du réservoir séparateur (10) et par l'autre extrémité, après un coude de 90°, pour s'éloigner du réservoir séparateur (10), à un moyen de découplage des forces (42A).

5. Dispositif de transport par le vide selon l'une des revendications 1 à 4,
**caractérisé en ce que**
les sections tranversales du courant d'orifice d'entrée (12A) et de la tubulure d'entrée (12) en comparaison a une tubulure de la sortie (14), un tube de connexion (14B) et d'orifice de la sortie (14A) sont éligible pour l'accord finement des forces réaction.

6. Dispositif de transport par le vide selon l'une des revendications 1 à 5,
**caractérisé en ce que**
les moyens de découplage de forces (40A, 42A) et les branchements des embouchures de la conduite d'aspiration (40) et de la conduite de vide (42) sont dirigés vers l'orifice d'entrée (12A) et vers l'orifice de sortie (14A).

7. Dispositif de transport par le vide selon l'une des revendications 1 à 6,
**caractérisé par**
un châssis de balance en deux parties dont la liaison est faite sous la forme d'une installation de pesée (50).

8. Dispositif de transport par le vide selon l'une des revendications 1 à 7,
**caractérisé par**
un châssis de support (22) intérieur relié au réservoir séparateur (10) et un châssis de support extérieur (24) comportant des moyens de support (28A, 28B) pour les conduites d'aspiration du côté actif et du côté du gaz nettoyé.

9. Dispositif de transport par le vide selon la revendication 8,
**caractérisé par**
au moins un moyen de découplage des forces (40A, 42A) entre le châssis de support extérieur (24) et le point de liaison correspondant (12A, 14A) du réservoir séparateur (10).

10. Dispositif de transport par le vide selon l'une des revendications 8 ou 9,
**caractérisé en ce que**
le châssis de support intérieur et/ou le châssis de support extérieur (22, 24) ont chacun une forme sensiblement en U.

11. Dispositif de transport par le vide selon la revendication 10,
**caractérisé en ce que**
le châssis de support intérieur et/ou le châssis de support extérieur (22, 24) sont équipés chacun d'un support vertical (23, 25) installé sensiblement au milieu de la forme en U.

12. Dispositif de transport par le vide selon l'une des revendications 8 à 11,
**caractérisé en ce que**
l'installation de pesée (50) est insérée de manière à coopérer entre le châssis de support extérieur (22) et le châssis de support intérieur (24).

13. Dispositif de transport par le vide selon la revendication 12,
**caractérisé en ce que**
l'installation de pesée est reliée de manière amovible au châssis de support extérieur et/ou au châssis de support intérieur (22, 24).

14. Dispositif de transport par le vide selon l'une des revendications 1 à 13, comportant en outre un filtre (15) installé dans la veine des gaz d'aspiration entre le côté actif et le côté de gaz filtré,
dispositif **caractérisé en ce que**
l'orientation des orifices d'embouchure (12A, 14A) l'un par rapport à l'autre et/ou le réservoir séparateur (10) assure la compensation de la différence de pression dans le châssis de pesée, différence de pression résultant du filtre (15).
